# EUROPEAN PATENT APPLICATION

(11) **EP 4 339 450 A1**
(43) Date of publication of application: **20.03.2024**
(21) Application number: 22861053.1
(22) Date of filing: 28.07.2022
(51) Int. Cl.: F03D 1/06, F03D 13/10

(54) **BLADE AND BLADE MANUFACTURING METHOD**

(30) Priority: 27.08.2021 JP 2021139304
(71) Applicant: Mitsubishi Heavy Industries, Ltd., Tokyo 100-8332 (JP)
(72) Inventor: FUJITA, Takeshi, Tokyo 100-8332 (JP); HIRANO, Toshiyuki, Tokyo 100-8332 (JP); SHIMIZU, Takayuki, Tokyo 100-8332 (JP); HIMENO, Takamitsu, Tokyo 100-8332 (JP)
(74) Representative: Studio Torta S.p.A.
(86) International application number: PCT/JP2022/029170
(87) International publication number: WO 2023/026762

(57) **Abstract**

A blade includes: a blade member that forms a blade main body; a leading edge protector that covers a surface of the blade member at a leading edge portion of the blade main body; a plate-shaped member that is arranged on a back surface opposite to a surface of the blade member covered by the leading edge protector; and a fastening member that is disposed to pass through the leading edge protector, the blade member, and the plate-shaped member, and fastens the leading edge protector, the blade member, and the plate-shaped member by holding the leading edge protector and the plate-shaped member. The blade member is formed to have a gap between the blade member and the fastening member.

## Description

### Field

The present disclosure relates to a blade and a method for manufacturing the blade.

### Background

On a blade that is disposed on a windmill or the like used for a wind power generation device, erosion damage is caused when raindrops, dust, and the like repeatedly collide with a leading edge portion thereof. To suppress such erosion damage, there is known a configuration in which a leading edge protector is arranged on the leading edge portion of the blade (for example, refer to Patent Literature 1).

### Citation List

### Patent Literature

Patent Literature 1: WO2018/219524

### Summary

### Technical Problem

The leading edge protector described above is attached to the leading edge portion of the blade with an adhesive agent, for example. Additionally, mechanical fastening may also be used to prevent the adhesive agent from peeling off and the leading edge protector from falling off. On the other hand, the blade is largely deformed, so that relative deformation may be caused between the leading edge protector and the blade, and a fastening portion may be damaged.

The present disclosure has been made in view of such a situation, and provides a blade in which a leading edge protector can be appropriately fastened to a leading edge portion and a method for manufacturing the blade. Solution to Problem

A blade according to the present disclosure includes: a blade member that forms a blade main body; a leading edge protector that covers a surface of the blade member at a leading edge portion of the blade main body; a plate-shaped member that is arranged on a back surface opposite to a surface of the blade member covered by the leading edge protector; and a fastening member that is disposed to pass through the leading edge protector, the blade member, and the plate-shaped member, and fastens the leading edge protector, the blade member, and the plate-shaped member by holding the leading edge protector and the plate-shaped member. The blade member is formed to have a gap between the blade member and the fastening member.

A method for manufacturing a blade according to the present disclosure includes the steps of: arranging a leading edge protector that covers a surface of a blade member on a leading edge portion of a blade main body that is formed by using the blade member; arranging a plate-shaped member on a back surface opposite to a surface covered by the leading edge protector of the blade member; forming a through hole passing through the leading edge protector, the blade member, and the plate-shaped member; and inserting a fastening member into the through hole to fasten the leading edge protector, the blade member, and the plate-shaped member. The step of forming the through hole includes forming the through hole to have a gap between the leading edge protector and the fastening member in a case in which the fastening member is arranged. Advantageous Effects of Invention

The present disclosure can provide a blade in which a leading edge protector can be appropriately fastened to a leading edge portion and a method for manufacturing the blade.

### Brief Description of Drawings

FIG. 1 is a diagram illustrating an example of a wind power generation device in which a blade according to the present embodiment is used.
FIG. 2 is a schematic diagram illustrating a configuration of the blade.
FIG. 3 is a diagram illustrating an enlarged view of part of the blade.
FIG. 4 is a diagram illustrating a configuration along the A-A cross section in FIG. 3.
FIG. 5 is a diagram illustrating an example of a manufacturing process of the blade.
FIG. 6 is a diagram illustrating an example of the manufacturing process of the blade.
FIG. 7 is a diagram illustrating an example of the manufacturing process of the blade.
FIG. 8 is a diagram illustrating an example of the manufacturing process of the blade.
FIG. 9 is a diagram illustrating an example of the manufacturing process of the blade.
FIG. 10 is a flowchart illustrating an example of a method for manufacturing the blade.
FIG. 11 is a diagram illustrating an example of a blade according to a second embodiment.
FIG. 12 is a diagram illustrating an example of a blade according to a third embodiment.
FIG. 13 is a diagram illustrating an example of a blade according to a fourth embodiment.
FIG. 14 is a diagram illustrating an example of a blade according to a fifth embodiment.
FIG. 15 is a diagram illustrating an example of a blade according to a sixth embodiment.

### Description of Embodiments

The following describes embodiments of a blade and a method for manufacturing the blade according to the present disclosure based on the drawings. The present invention is not limited to the embodiments. Constituent elements in the embodiments described below encompass a constituent element that can be easily replaced by those skilled in the art, or substantially the same constituent element. The present embodiment exemplifies a blade used for a wind power generation device, but the embodiment is not limited thereto. In another embodiment, the blade may be a blade of an aircraft or a blade of a helicopter (rotor blade). In still another embodiment, the blade may be a turbine blade of an engine, a gas turbine, or a steam turbine. In yet another embodiment, the blade may be a blade used for a blower or the like in a power generation plant, a chemical plant, and the like.

### [First embodiment]

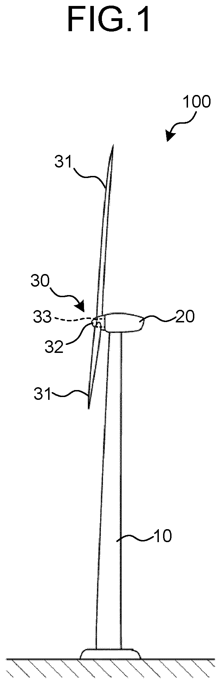

FIG. 1 is a diagram illustrating an example of a wind power generation device 100 in which a blade 31 according to the present embodiment is used. As illustrated in FIG. 1, the wind power generation device 100 includes a tower 10, a power generator 20, and a windmill 30. The tower 10 is installed on the ground or the like, for example, and supports the power generator 20 at a top part thereof. The power generator 20 includes a rotating shaft 21. The windmill 30 is attached to the rotating shaft of the power generator 20. The windmill 30 includes the blade 31, a hub 32, and a rotor 33. At least one blade 31 is disposed, and attached to the hub 32. The hub 32 is fixed to the rotor 33. The rotor 33 is supported to be able to rotate about a rotation center axis of the rotating shaft 21 as a center. The wind power generation device 100 converts rotational energy of the windmill 30 into electric energy when the blade 31 receives wind to rotate the rotor 33, and the power generator 20 is driven by rotation of the rotor 33.

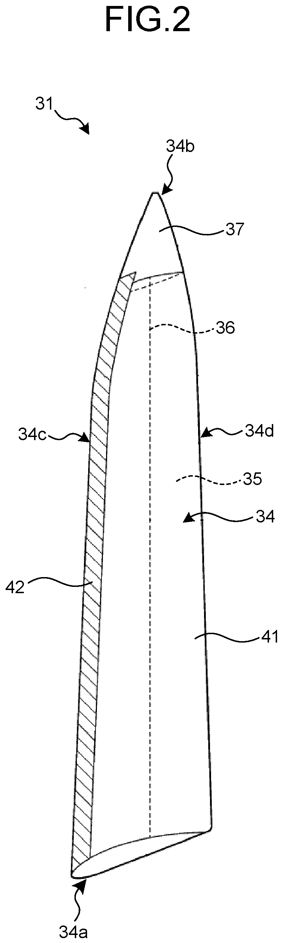

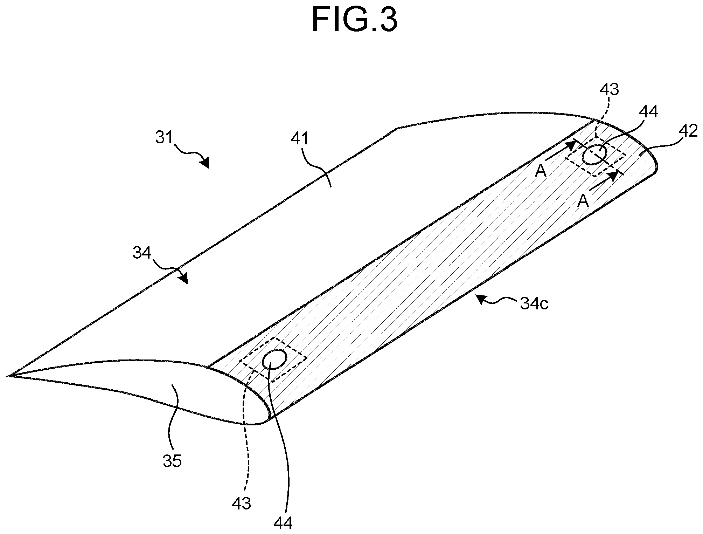

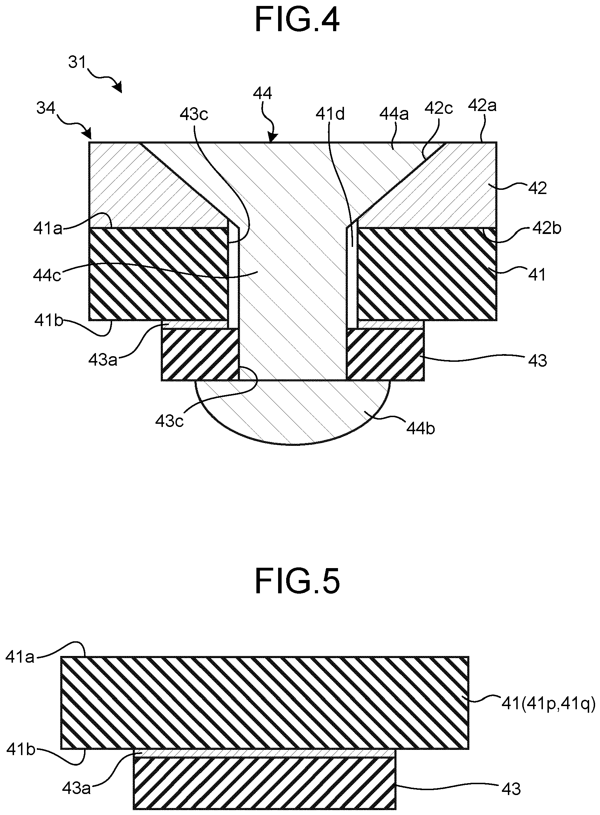

FIG. 2 is a schematic diagram illustrating a configuration of the blade 31. As illustrated in FIG. 2, the blade 31 includes a blade main body 34. The blade main body 34 includes a blade root portion 34a and a blade front end portion 34b at both ends in a blade length direction, and includes a leading edge portion 34c and a trailing edge portion 34d at both ends in a blade chord direction. FIG. 3 is a diagram illustrating an enlarged view of part of the blade 31. FIG. 4 is a diagram illustrating a configuration along the A-A cross section in FIG. 3. As illustrated in FIG. 2 and FIG. 3, the blade 31 includes a blade member 41, a leading edge protector 42, a plate-shaped member 43, and a fastening member 44.

The blade member 41 constitutes the blade main body 34. The blade member 41 is formed by using fiber-reinforced plastics and the like such as glass fiber-reinforced plastics and carbon fiber-reinforced plastics, for example. Blade members 41 are arranged to be opposed to each other on a back side and a belly side of the blade main body 34 to form a hollow space 35, and connected to each other at the leading edge portion 34c and the trailing edge portion 34d.

A down conductor 36 is arranged in the hollow space 35 of the blade member 41. The down conductor 36 is formed by using a conductive material. The down conductor 36 constitutes at least part of an electric circuit through which a lightning current generated on the blade 31 flows when the blade 31 is struck by lightning. The down conductor 36 is arranged along the blade length direction inside the hollow space 35. One end of the down conductor 36 is connected to a chip receptor 37 arranged at the blade front end portion 34b, and the other end thereof is connected to a ground wire (not illustrated) that is disposed on the blade root portion 34a side.

The leading edge protector 42 covers a surface 41a of the blade member 41 at the leading edge portion 34c of the blade main body 34. The leading edge protector 42 covers the leading edge portion 34c to protect the leading edge portion 34c against raindrops, dust, and the like, and suppress erosion damage of the blade main body 34. The leading edge protector 42 is formed by using a metallic material such as titanium, for example.

The plate-shaped member 43 is arranged on a back surface 41b of the blade member 41 at the leading edge portion 34c of the blade main body 34. The plate-shaped member 43 is formed by using a resin material, for example. The plate-shaped member 43 is joined to the back surface 41b of the blade member 41 via an adhesive agent 43a formed of resin or the like. The adhesive agent 43a prevents the plate-shaped member 43 from peeling off from the back surface 41b. Additionally, in a case in which force in a direction along the back surface 41b works on the plate-shaped member 43, for example, the adhesive agent 43a can be deformed to move the plate-shaped member 43 in the direction along the back surface 41b. In this way, the plate-shaped member 43 is arranged in a state in which movement thereof in a direction away from the back surface 41b is regulated and movement thereof in the direction along the back surface 41b is allowed.

The fastening member 44 is disposed to pass through the leading edge protector 42, the blade member 41, and the plate-shaped member 43. The fastening member 44 fastens the leading edge protector 42, the blade member 41, and the plate-shaped member 43 by holding the leading edge protector 42 and the plate-shaped member 43. The fastening member 44 includes a head portion 44a, a fastener portion 44b, and a shaft portion 44c. The head portion 44a presses the leading edge protector 42 toward the blade member 41 side. The fastener portion 44b presses the plate-shaped member 43 toward the blade member 41 side. The shaft portion 44c passes through the leading edge protector 42, the blade member 41, and the plate-shaped member 43, and connects the head portion 44a with the fastener portion 44b. In the present embodiment, as the fastening member 44, used is a blind fastener that can be deformed so that the diameter of the fastener portion 44b is increased by an operation from the leading edge protector 42 side, for example.

As illustrated in FIG. 4, a through hole 42c corresponding to the shape of the head portion 44a is formed on a surface 42a of the leading edge protector 42. The head portion 44a is housed in the through hole 42c to block the through hole 42c. Due to this, the head portion 44a is arranged in a state in which movement thereof in a direction along the surface 41a of the blade member 41 is regulated. This configuration can prevent a gap from being formed between the head portion 44a and an inner peripheral surface of the through hole 42c, and prevent raindrops, dust, and the like from entering the gap. In the present embodiment, the through hole 42c has a tapered shape the diameter of which is reduced in a direction from the surface 42a toward the back surface 42b on the blade member 41 side (hereinafter, referred to as a depth direction). The head portion 44a is arranged in a state of engaging with the through hole 42c in the depth direction.

A through hole 41c having a larger diameter than the diameter of the shaft portion 44c is formed on the blade member 41. An inner peripheral surface of the through hole 41c is formed to have a gap 41d between itself and the shaft portion 44c. By disposing this gap 41d, in a case in which the blade member 41 is deformed, deformation can be released to the gap 41d. That is, in a case in which the blade member 41 is deformed, the blade member 41 can be prevented from applying force in a direction of shearing the shaft portion 44c.

A through hole 43c having a diameter corresponding to the diameter of the shaft portion 44c is formed on the plate-shaped member 43. For example, an outer peripheral surface of the shaft portion 44c is in a state of being supported by an inner peripheral surface of the through hole 43c. This configuration can prevent the fastener portion 44b from entering the through hole 43c in a case in which the diameter of the fastener portion 44b is increased. Due to this, the plate-shaped member 43 can be securely pressed toward the blade member 41 side by the fastener portion 44b. When the plate-shaped member 43 is arranged, the blade member 41 is not brought into contact with the fastener portion 44b. Due to this, in a case in which the blade member 41 is deformed, it is possible to prevent a load from being directly applied to the fastener portion 44b.

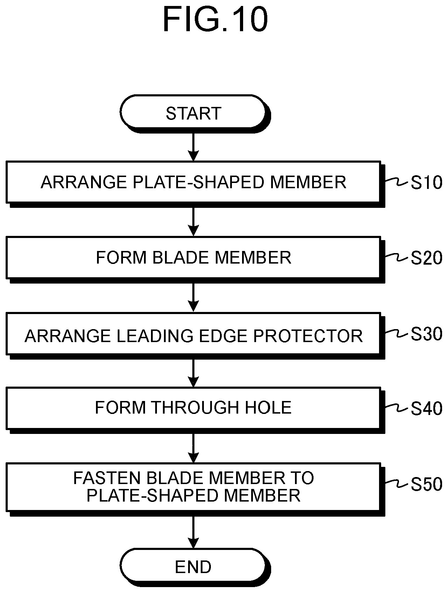

Next, the following describes a method for manufacturing the blade 31 described above. FIG. 5 to FIG. 9 are diagrams illustrating examples of a process of manufacturing the blade 31. FIG. 10 is a flowchart illustrating an example of the method for manufacturing the blade 31. First, as illustrated in FIG. 5, the plate-shaped member 43 is arranged on the back surface 41b of a portion corresponding to the leading edge portion 34c of a back side member 41p and a belly side member 41q constituting the blade member 41 (Step S10: FIG. 10). The through hole is formed on the plate-shaped member 43 in a later process, and the plate-shaped member 43 is held by the adhesive agent 43a not to peel off when being fastened by the fastening member 44.

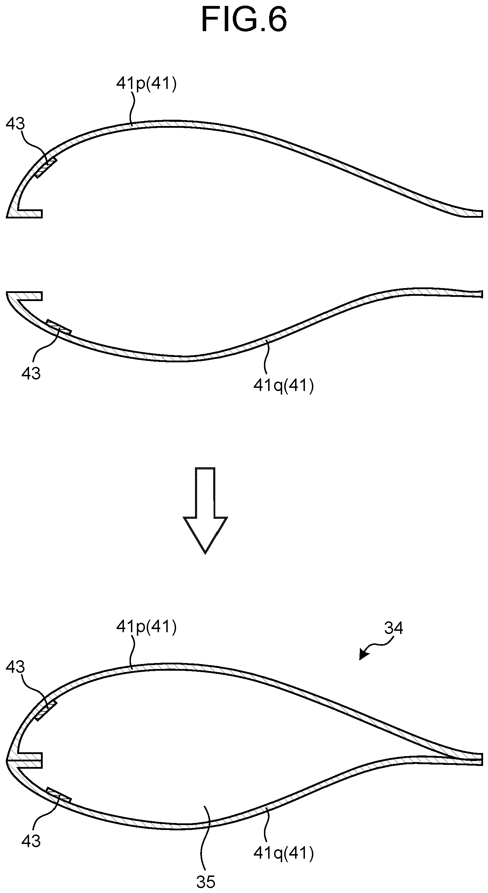

Next, as illustrated in FIG. 6, the back side member 41p and the belly side member 41q of the blade member 41 are joined to form the blade main body 34 (Step S20: FIG. 10). With this configuration, the plate-shaped member 43 is housed in the hollow space 35 of the blade main body 34.

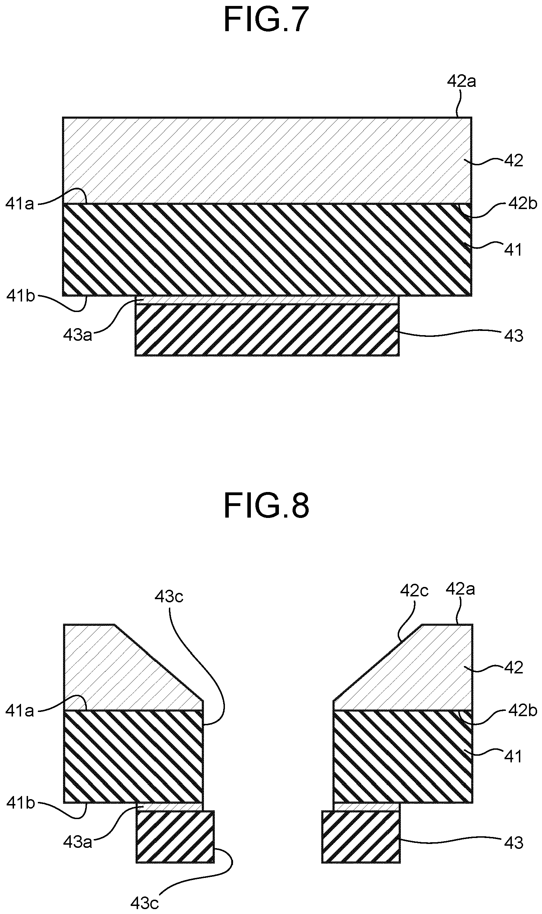

Next, as illustrated in FIG. 7, the leading edge protector 42 is arranged on the surface 41a of the blade member 41 at the leading edge portion 34c of the blade main body 34 (Step S30: FIG. 10).

Next, as illustrated in FIG. 8, the through holes 42c, 41c, and 43c are formed to pass through the leading edge protector 42, the blade member 41, and the plate-shaped member 43 (Step S40: FIG. 10). In this case, the diameter of the through hole 41c of the blade member 41 is formed to be larger than the diameter of the shaft portion 44c so that the gap 41d is formed between the blade member 41 and the shaft portion 44c in a case in which the fastening member 44 is arranged.

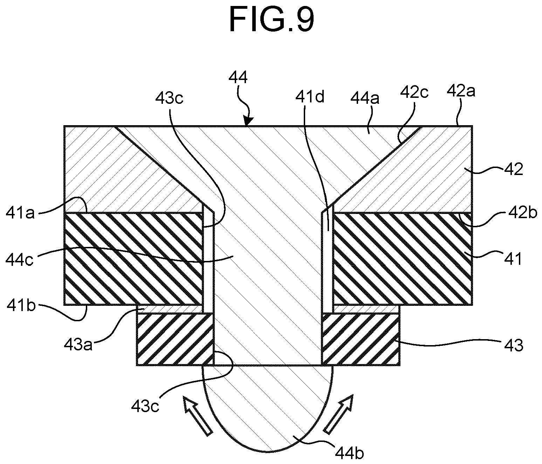

Next, as illustrated in FIG. 9, the fastening member 44 is arranged. For example, the shaft portion 44c of the fastening member 44 and the fastener portion 44b before the diameter of which is increased are inserted into the through holes 42c, 41c, and 43c in order. In a case in which the fastener portion 44b passes through the through hole 43c and reaches the hollow space 35, the diameter of the fastener portion 44b is increased by operating the head portion 44a of the fastening member 44 from an outer side of the hollow space 35. When the diameter of the fastener portion 44b is increased, the fastener portion 44b presses the plate-shaped member 43 from the hollow space 35 side toward the blade member 41 side. Due to this, the fastening member 44 fastens the blade member 41 to the plate-shaped member 43 (Step S50: FIG. 10).

As described above, the blade 31 according to the present embodiment includes the blade member 41 that forms the blade main body 34, the leading edge protector 42 that covers the surface 41a of the blade member 41 at the leading edge portion 34c of the blade main body 34, the plate-shaped member 43 that is arranged on the back surface 41b opposite to a surface covered by the leading edge protector 42 of the blade member 41, and the fastening member 44 that is disposed to pass through the leading edge protector 42, the blade member 41, and the plate-shaped member 43, and fastens the leading edge protector 42, the blade member 41, and the plate-shaped member 43 by holding the leading edge protector 42 and the plate-shaped member 43. The blade member 41 is formed to have the gap 41d between itself and the fastening member 44.

With this configuration, the blade member 41 is formed to have the gap 41d between itself and the fastening member 44, so that, in a case in which the blade member 41 is deformed, deformation can be released to the gap 41d, and the blade member 41 can be prevented from applying force in a direction of shearing the fastening member 44. The blade member 41 is fastened to the fastening member 44 via the plate-shaped member 43, so that the blade member 41 is not brought into contact with the fastener portion 44b as a fastening portion of the fastening member 44. Due to this, in a case in which the blade member 41 is deformed, it is possible to prevent a load from being directly applied to the fastener portion 44b. Accordingly, the leading edge protector 42 can be appropriately fastened to the leading edge portion 34c of the blade main body 34.

In the blade 31 according to the present embodiment, the plate-shaped member 43 is arranged in a state in which movement thereof in a direction away from the back surface 41b is regulated. Accordingly, in a case in which the fastening member 44 is arranged, for example, the plate-shaped member 43 can be prevented from peeling off.

In the blade 31 according to the present embodiment, the plate-shaped member 43 is arranged in a state in which movement thereof in a direction along the back surface 41b is allowed. Accordingly, in a case in which the blade member 41 is deformed, when the plate-shaped member 43 moves in the direction along the back surface 41b between the blade member 41 and the fastening member 44, part of the force working on the fastening member 44 from the blade member 41 can be released.

In the blade 31 according to the present embodiment, the plate-shaped member 43 is formed of a resin material. Accordingly, when fastening is performed with the fastening member 44, the resin material is compressed and bent to cause relaxation. Due to this relaxation, fastening force of the fastening member 44 is relieved, so that a shearing load can be prevented from being applied to the shaft portion 44c.

In the blade 31 according to the present embodiment, the fastening member 44 includes the head portion 44a that presses the leading edge protector 42 toward the blade member 41 side, the fastener portion 44b that presses the plate-shaped member 43 toward the blade member 41 side, and the shaft portion 44c that passes through the leading edge protector 42, the blade member 41, and the plate-shaped member 43 to connect the head portion 44a with the fastener portion 44b. Accordingly, the head portion 44a and the fastener portion 44b can securely hold the leading edge protector 42 and the plate-shaped member 43 therebetween, so that the leading edge protector 42 can be appropriately fastened to the blade member 41.

In the blade 31 according to the present embodiment, the fastening member 44 is arranged in a state in which movement of the head portion 44a in a direction along the surface 41a of the blade member 41 is regulated. This configuration can prevent a gap from being formed between the head portion 44a and an inner peripheral surface of the through hole 42c, and prevent raindrops, dust, and the like from entering the gap.

In the blade 31 according to the present embodiment, the fastening member 44 is a blind fastener that can be deformed so that the diameter of the fastener portion 44b is increased by an operation from the leading edge protector 42 side. Thus, fastening can be performed with the fastening member 44 after the blade members 41 are bonded to configure the blade main body 34.

The method for manufacturing the blade 31 according to the present embodiment includes a step of arranging the leading edge protector 42 that covers the surface 41a of the blade member 41 on the leading edge portion 34c of the blade main body 34 that is formed by using the blade member 41, a step of arranging the plate-shaped member 43 on the back surface 41b as a surface of the blade member 41 on the back side of the leading edge protector 42, a step of forming the through hole passing through the leading edge protector 42, the blade member 41, and the plate-shaped member 43, and a step of inserting the fastening member 44 into the through hole to fasten the leading edge protector 42, the blade member 41, and the plate-shaped member 43. At the step of forming the through hole, the through hole is formed to have the gap 41d between the leading edge protector 42 and the outer peripheral surface of the fastening member 44 in a case in which the fastening member 44 is arranged. Thus, it is possible to efficiently manufacture the blade 31 having the configuration in which the leading edge protector 42 is appropriately fastened to the leading edge portion 34c of the blade main body 34.

### [Second embodiment]

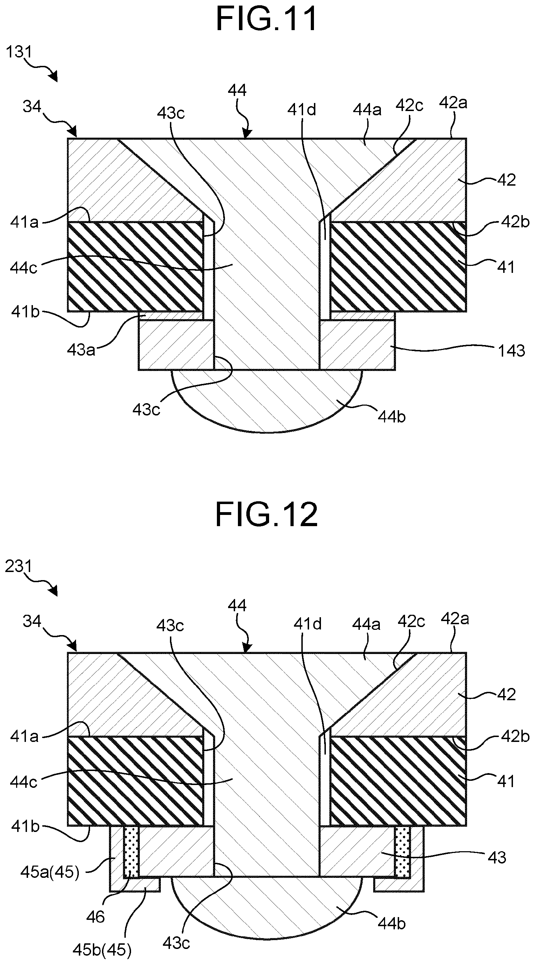

Next, the following describes a second embodiment of the present disclosure. FIG. 11 is a diagram illustrating an example of a blade 131 according to the second embodiment. The blade 131 illustrated in FIG. 11 is different from the first embodiment in that the blade 131 includes a plate-shaped member 143 that is formed by using a metallic material.

The plate-shaped member 143 formed of a metallic material is disposed on the blade 131 according to the present embodiment, so that relaxation is hardly caused in a case in which fastening is performed with the fastening member 44. Thus, force working on the fastening member 44 can be released by the plate-shaped member 143 in a case in which the blade member 41 is deformed while maintaining fastening force of the fastening member 44.

### [Third embodiment]

Next, the following describes a third embodiment of the present disclosure. FIG. 12 is a diagram illustrating an example of a blade 231 according to the third embodiment. The blade 231 illustrated in FIG. 12 has a configuration in which the plate-shaped member 43 is not joined to the blade member 41, and a supporting member 45 and an elastic member 46 are further provided. Alternatively, another member that is plastically deformed with a predetermined load may be disposed, for example, in place of the elastic member 46.

The supporting member 45 includes a side wall portion 45a and a projecting portion 45b. The side wall portion 45a is joined to the back surface 41b of the blade member 41. The side wall portion 45a surrounds an outer peripheral part of the plate-shaped member 43 in a direction along the back surface 41b. The projecting portion 45b projects from the side wall portion 45a toward the plate-shaped member 43 side to support the plate-shaped member 43. The projecting portion 45b regulates movement of the plate-shaped member 43 in a direction away from the back surface 41b of the blade member 41.

The elastic member 46 is arranged between the side wall portion 45a and the plate-shaped member 43. The elastic member 46 is in contact with at least part of the outer peripheral part of the plate-shaped member 43 in a direction along the back surface 41b. As the elastic member 46, for example, foam or the like is used. In a case in which the plate-shaped member 43 tries to move in a direction along the back surface 41b, the elastic member 46 is elastically deformed to allow movement thereof. The elastic member 46 prevents the plate-shaped member 43 from shifting in a direction along the back surface 41b in a case in which no force works on the plate-shaped member 43 from the blade member 41 side.

As described above, the blade 231 according to the present embodiment further includes the supporting member 45 that surrounds the outer peripheral part of the plate-shaped member 43 in the direction along the back surface 41b, and at least part of the supporting member 45 projects toward the plate-shaped member 43 side to regulate movement of the plate-shaped member 43 in a direction away from the back surface 41b. Thus, it is possible to regulate movement of the plate-shaped member 43 in a direction away from the back surface 41b of the blade member 41 without joining the plate-shaped member 43 to the blade member 41. Due to this, the plate-shaped member 43 can be easily moved in a direction along the back surface 41b.

The blade 231 according to the present embodiment further includes the elastic member that is in contact with at least part of the outer peripheral part of the plate-shaped member 43 in a direction along the back surface 41b, and elastically deformed to allow movement of the plate-shaped member 43 when the plate-shaped member 43 moves in a direction along the back surface 41b. Thus, in a case in which the plate-shaped member 43 receives force from the blade member 41 side and tries to move in a direction along the back surface 41b, the elastic member can be elastically deformed to allow the movement. Additionally, it is possible to prevent the plate-shaped member 43 from shifting in a direction along the back surface 41b in a case in which no force works on the plate-shaped member 43 from the blade member 41 side.

### [Fourth embodiment]

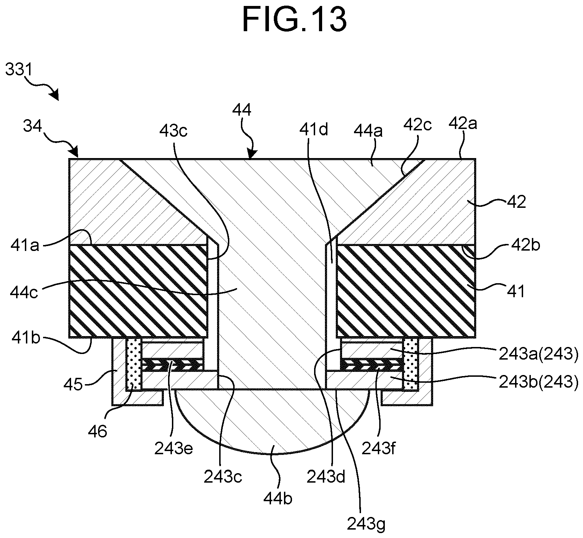

Next, the following describes a fourth embodiment of the present disclosure. FIG. 13 is a diagram illustrating an example of a blade 331 according to the fourth embodiment. The blade 331 illustrated in FIG. 13 is different from the configuration of the blade 231 according to the third embodiment in that a plurality of plate-shaped members 243 are disposed in a laminated state, and other configurations are the same as those of the blade 231 according to the third embodiment.

The plate-shaped members 243 are formed by using a resin material or a metallic material, for example. In the present embodiment, the two plate-shaped members 243 are arranged. Hereinafter, in a case of distinguishing the two plate-shaped members 243 from each other, they are referred to as plate-shaped members 243a and 243b.

The plate-shaped member 243a is joined to the back surface 41b of the blade member 41. A through hole 243c through which the shaft portion 44c of the fastening member 44 passes is formed on the plate-shaped member 243a. The through hole 243c is formed to have a larger diameter than the diameter of the shaft portion 44c, for example, so that a gap is formed between the plate-shaped member 243a and the shaft portion 44c.

The plate-shaped member 243b is arranged on the hollow space 35 side with respect to the plate-shaped member 243a. The plate-shaped member 243b is disposed in a state of being supported by the projecting portion 45b of the supporting member 45. A through hole 243d through which the shaft portion 44c passes is formed on the plate-shaped member 243b. The through hole 243d is formed to have a smaller diameter than that of the fastener portion 44b so that the fastener portion 44b of the fastening member 44 does not enter the through hole 243d.

Each of the plate-shaped member 243a and the plate-shaped member 243b is formed by using a resin material, a metallic material, or the like having high rigidity. The plate-shaped member 243a and the plate-shaped member 243b respectively include sliding layers 243e and 243f on opposing surfaces. The sliding layers 243e and 243f are formed in a plate shape by using a material having a low friction coefficient such as polytetrafluoroethylene (PTFE) or carbon, for example. The sliding layer 243e is joined to the plate-shaped member 243a. The sliding layer 243f is joined to the plate-shaped member 243b. With this configuration, the plate-shaped member 243a and the plate-shaped member 243b can be slid along the back surface 41b by the sliding layers 243e and 243f while securing the rigidity of the plate-shaped members 243a and 243b. The plate-shaped member 243b is formed so that a surface 243g in contact with the fastener portion 44b is a rough surface. With this configuration, frictional force is generated between the fastener portion 44b and the plate-shaped member 243b. Due to this frictional force, the fastener portion 44b and the plate-shaped member 243b are integrally slid as much as possible.

As described above, in the blade 331 according to the present embodiment, the plate-shaped members 243 are disposed in a laminated state. Thus, at the time when the blade member 41 is deformed, the plate-shaped members 243 can successively move to efficiently release the force from the blade member 41 side.

In the blade 331 according to the present embodiment, the plate-shaped members 243 respectively include the sliding layers 243e and 243f on the opposing surfaces. Thus, by sliding the plate-shaped members 243 by the sliding layers 243e and 243f, relative movement of the plate-shaped members 243 can be easily caused. Due to this, the force from the blade member 41 can be efficiently released.

In the blade 331 according to the present embodiment, the plate-shaped member 243b is formed so that the surface 243g in contact with the fastener portion 44b is a rough surface. With this configuration, frictional force can be generated between the fastener portion 44b and the plate-shaped member 243b, and the fastener portion 44b and the plate-shaped member 243b can be integrally slid as much as possible by this frictional force.

### [Fifth embodiment]

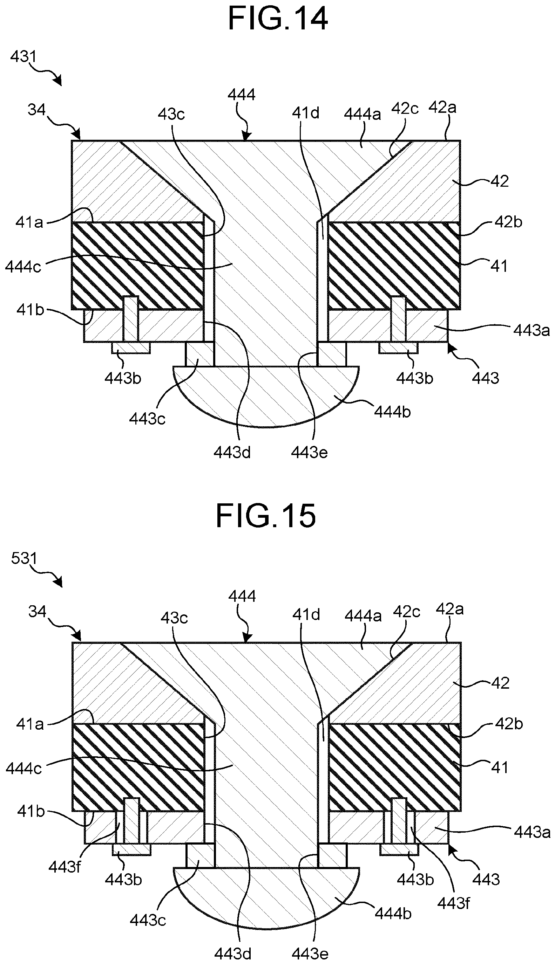

Next, the following describes a fifth embodiment of the present disclosure. FIG. 14 is a diagram illustrating an example of a blade 431 according to the fifth embodiment. In the blade 431 illustrated in FIG. 14, a fastening member 444 is a bolt-nut mechanism in which a shaft portion 444c is screw-joined to a fastener portion 444b. A plate-shaped member 443 is a nut plate. Other configurations are the same as those of the blade 31 according to the first embodiment.

The plate-shaped member 443 includes a plate member 443a, a bolt 443b for fixing, and a slider 443c. The plate member 443a is formed in a plate shape using a metallic material, for example. The plate member 443a is fixed to the back surface 41b of the blade member 41 with the bolt 443b for fixing. The plate member 443a has an opening 443d passing therethrough in a thickness direction. The slider 443c is arranged across the opening 443d of the plate member 443a, and disposed to be movable with respect to the plate member 443a. The slider 443c has a through hole 443e through which the shaft portion 444c of the fastening member 444 passes.

The fastening member 444 is arranged so that the shaft portion 444c passes through the opening 443d of the plate member 443a and the through hole 443e of the slider 443c. The fastener portion 444b is screw-joined from an end part of the shaft portion 444c, and is fastened by pressing the slider 443c toward the plate member 443a side. Force for pressing the plate member 443a by the slider 443c can be adjusted by adjusting screw-joining between the fastener portion 444b and the shaft portion 444c.

In a case in which the blade member 41 is deformed, force from the blade member 41 is transmitted to the plate member 443a, and the plate member 443a and the slider 443c relatively move in a direction along the back surface 41b of the blade member 41. Due to this movement, in a case in which the blade member 41 is deformed, it is possible to prevent a load from being directly applied to the fastener portion 444b.

As described above, in the blade 431 according to the present embodiment, the fastening member 444 is the bolt-nut mechanism in which the shaft portion 444c is screw-joined to the fastener portion 444b, and the plate-shaped member 443 is the nut plate including the plate member 443a that has the opening 443d and the slider 443c that is arranged across the opening 443d and can move relatively to the plate member 443a. Thus, in a case in which the blade member 41 is deformed, force from the blade member 41 is transmitted to the plate member 443a, and the plate member 443a and the slider 443c relatively move in a direction along the back surface 41b of the blade member 41. Due to this movement, in a case in which the blade member 41 is deformed, it is possible to prevent a load from being directly applied to the fastener portion 444b.

### [Sixth embodiment]

Next, the following describes a sixth embodiment of the present disclosure. FIG. 15 is a diagram illustrating an example of a blade 531 according to the sixth embodiment. In the blade 531 illustrated in FIG. 15, the plate member 443a and the bolt 443b for fixing can relatively move in a direction along the back surface 41b of the blade member 41. Other configurations are the same as those of the blade 431 according to the fifth embodiment.

In the plate-shaped member 443 of the blade 531 according to the present embodiment, a gap 443f is formed between the plate member 443a and the bolt 443b for fixing. Due to this gap 443f, in the plate-shaped member 443, the plate member 443a and the bolt 443b for fixing can relatively move. Thus, at the time when the force from the blade member 41 is transmitted to the plate member 443a in a case in which the blade member 41 is deformed, the plate member 443a can move in a direction along the back surface 41b with respect to the blade member 41. Due to this movement, in a case in which the blade member 41 is deformed, it is possible to more efficiently prevent a load from being directly applied to the fastener portion 444b.

The blade 31 according to the first embodiment includes the blade member 41 forming the blade main body 34 that rotates integrally with the rotor 33, the leading edge protector 42 that covers the surface 41a of the blade member 41 at the leading edge portion 34c of the blade main body 34, the plate-shaped member 43 that is arranged on the back surface 41b of a surface covered by the leading edge protector 42 of the blade member 41, and the fastening member 44 that is disposed to pass through the leading edge protector 42, the blade member 41, and the plate-shaped member 43, and fastens the leading edge protector 42, the blade member 41, and the plate-shaped member 43 by holding the leading edge protector 42 and the plate-shaped member 43. The blade member 41 is formed to have the gap 41d between itself and the fastening member 44. With this configuration, the blade member 41 is formed to have the gap 41d between itself and the fastening member 44, so that, in a case in which the blade member 41 is deformed, deformation can be released to the gap 41d, and the blade member 41 can be prevented from applying force in a direction of shearing the fastening member 44. The blade member 41 is fastened to the fastening member 44 via the plate-shaped member 43, so that the blade member 41 is not brought into contact with the fastener portion 44b as a fastening portion of the fastening member 44. Due to this, in a case in which the blade member 41 is deformed, it is possible to prevent a load from being directly applied to the fastener portion 44b. Accordingly, the leading edge protector 42 can be appropriately fastened to the leading edge portion 34c of the blade main body 34.

In the blade 31 according to the first embodiment, the plate-shaped member 43 is arranged in a state in which movement thereof in a direction away from the back surface 41b is regulated. Accordingly, in a case in which the fastening member 44 is arranged, for example, the plate-shaped member 43 can be prevented from peeling off.

The blade 231 according to the third embodiment further includes the supporting member 45 that surrounds the outer peripheral part of the plate-shaped member 43 in the direction along the back surface 41b, and at least part of the supporting member 45 projects toward the plate-shaped member 43 side to regulate movement of the plate-shaped member 43 in a direction away from the back surface 41b. Thus, it is possible to regulate movement of the plate-shaped member 43 in a direction away from the back surface 41b of the blade member 41 without joining the plate-shaped member 43 to the blade member 41. Due to this, the plate-shaped member 43 can be easily moved in a direction along the back surface 41b.

In the blade 31 according to the first embodiment, the plate-shaped member 43 is arranged in a state in which movement thereof in a direction along the back surface 41b is allowed. Accordingly, in a case in which the blade member 41 is deformed, when the plate-shaped member 43 moves in the direction along the back surface 41b between the blade member 41 and the fastening member 44, part of the force working on the fastening member 44 from the blade member 41 can be released.

The blade 231 according to the third embodiment further includes the elastic member that is in contact with at least part of the outer peripheral part of the plate-shaped member 43 in a direction along the back surface 41b, and elastically deformed to allow movement of the plate-shaped member 43 when the plate-shaped member 43 moves in a direction along the back surface 41b. Thus, in a case in which the plate-shaped member 43 receives force from the blade member 41 side and tries to move in a direction along the back surface 41b, the elastic member can be elastically deformed to allow the movement. Additionally, it is possible to prevent the plate-shaped member 43 from shifting in a direction along the back surface 41b in a case in which no force works on the plate-shaped member 43 from the blade member 41 side.

In the blade 31 according to the first embodiment, the plate-shaped member 43 is formed of a resin material. Accordingly, when fastening is performed with the fastening member 44, the resin material is compressed and bent to cause relaxation. Due to this relaxation, fastening force of the fastening member 44 is relieved, so that a shearing load can be prevented from being applied to the shaft portion 44c.

The plate-shaped member 143 formed of a metallic material is disposed in the blade 131 according to the second embodiment, so that relaxation is hardly caused in a case in which fastening is performed with the fastening member 44. Thus, force working on the fastening member 44 can be released by the plate-shaped member 143 in a case in which the blade member 41 is deformed while maintaining fastening force of the fastening member 44.

In the blade 331 according to the fourth embodiment, the plate-shaped members 243 are disposed in a laminated state. Thus, at the time when the blade member 41 is deformed, the plate-shaped members 243 can successively move to efficiently release the force from the blade member 41 side.

In the blade 331 according to the fourth embodiment, the plate-shaped members 243 respectively include the sliding layers 243e and 243f on the opposing surfaces. Thus, by sliding the plate-shaped members 243 by the sliding layers 243e and 243f, relative movement of the plate-shaped members 243 can be easily caused. Due to this, the force from the blade member 41 can be efficiently released.

In the blade 31 according to the first embodiment, the fastening member 44 includes the head portion 44a that presses the leading edge protector 42 toward the blade member 41 side, the fastener portion 44b that presses the plate-shaped member 43 toward the blade member 41 side, and the shaft portion 44c that passes through the leading edge protector 42, the blade member 41, and the plate-shaped member 43 to connect the head portion 44a with the fastener portion 44b. Accordingly, the head portion 44a and the fastener portion 44b can securely hold the leading edge protector 42 and the plate-shaped member 43 therebetween, so that the leading edge protector 42 can be appropriately fastened to the blade member 41.

In the blade 31 according to the first embodiment, the fastening member 44 is arranged in a state in which movement of the head portion 44a in a direction along the surface 41a of the blade member 41 is regulated. This configuration can prevent a gap from being formed between the head portion 44a and an inner peripheral surface of the through hole 42c, and prevent raindrops, dust, and the like from entering the gap.

In the blade 31 according to the first embodiment, the fastening member 44 is a blind fastener that can be deformed so that the diameter of the fastener portion 44b is increased by an operation from the leading edge protector 42 side. Thus, fastening can be performed with the fastening member 44 after the blade members 41 are bonded to configure the blade main body 34.

In the blade 331 according to the fourth embodiment, the plate-shaped member 243b is formed so that the surface 243g in contact with the fastener portion 44b is a rough surface. With this configuration, frictional force can be generated between the fastener portion 44b and the plate-shaped member 243b, and the fastener portion 44b and the plate-shaped member 243b can be integrally slid as much as possible by this frictional force.

In the blade 431 according to the fifth embodiment, the fastening member 444 is the bolt-nut mechanism in which the shaft portion 444c is screw-joined to the fastener portion 444b, and the plate-shaped member 443 is the nut plate including the plate member 443a that has the opening 443d and the slider 443c that is arranged across the opening 443d and can move relatively to the plate member 443a. Thus, in a case in which the blade member 41 is deformed, force from the blade member 41 is transmitted to the plate member 443a, and the plate member 443a and the slider 443c relatively move in a direction along the back surface 41b of the blade member 41. Due to this movement, in a case in which the blade member 41 is deformed, it is possible to prevent a load from being directly applied to the fastener portion 444b.

In the plate-shaped member 443 of the blade 531 according to the sixth embodiment, the gap 443f is formed between the plate member 443a and the bolt 443b for fixing. Due to this gap 443f, in the plate-shaped member 443, the plate member 443a and the bolt 443b for fixing can relatively move. Thus, at the time when the force from the blade member 41 is transmitted to the plate member 443a in a case in which the blade member 41 is deformed, the plate member 443a can move in a direction along the back surface 41b with respect to the blade member 41. Due to this movement, in a case in which the blade member 41 is deformed, it is possible to more efficiently prevent a load from being directly applied to the fastener portion 444b.

The method for manufacturing the blade 31 according to the first embodiment includes a step of arranging the leading edge protector 42 that covers the surface 41a of the blade member 41 on the leading edge portion 34c of the blade main body 34 that is formed by using the blade member 41, a step of arranging the plate-shaped member 43 on the back surface 41b as a surface of the blade member 41 on the back side of the leading edge protector 42, a step of forming the through hole passing through the leading edge protector 42, the blade member 41, and the plate-shaped member 43, and a step of inserting the fastening member 44 into the through hole to fasten the leading edge protector 42, the blade member 41, and the plate-shaped member 43. At the step of forming the through hole, the through hole is formed to have the gap 41d between the leading edge protector 42 and the outer peripheral surface of the fastening member 44 in a case in which the fastening member 44 is arranged. Thus, it is possible to efficiently manufacture the blade 31 having the configuration in which the leading edge protector 42 is appropriately fastened to the leading edge portion 34c of the blade main body 34.

A technical scope of the present invention is not limited to the embodiments described above, and can be appropriately modified without departing from the gist of the present invention. For example, the blade 31 used for the wind power generation device 100 is exemplified in the embodiments described above, but the embodiment is not limited thereto. The description of the embodiments described above can also be applied to other blades such as a blade of an aircraft or a blade used for a propeller of a helicopter (rotor blade), for example, a turbine blade of an engine, a gas turbine, or a steam turbine, a blade used for a blower and the like in a power generation plant, a chemical plant, and the like.

### Reference Signs List

10 TOWER
20 POWER GENERATOR
21 ROTATING SHAFT
30 WINDMILL
31, 131, 231, 331, 431, 531 BLADE
32 HUB
33 ROTOR
34 BLADE MAIN BODY
34a BLADE ROOT PORTION
34b BLADE FRONT END PORTION
34c LEADING EDGE PORTION
34d TRAILING EDGE PORTION
35 HOLLOW SPACE
36 DOWN CONDUCTOR
37 CHIP RECEPTOR
41 BLADE MEMBER
41a, 42a SURFACE
41b, 42b BACK SURFACE
41c, 42c, 43c, 243c, 243d, 443e THROUGH HOLE
41d GAP
42 LEADING EDGE PROTECTOR
43, 143, 144, 243, 243a, 243b, 443 PLATE-SHAPED MEMBER
43a ADHESIVE AGENT
44, 444 FASTENING MEMBER
44a HEAD PORTION
44b, 444b FASTENER PORTION
44c, 444c SHAFT PORTION
45 SUPPORTING MEMBER
45a SIDE WALL PORTION
45b PROJECTING PORTION
46 ELASTIC MEMBER
100 WIND POWER GENERATION DEVICE
243e, 243f SLIDING LAYER
443a PLATE MEMBER
443b BOLT FOR FIXING
443c SLIDER
443d OPENING
443f GAP

## Claims

1. A blade comprising:
a blade member that forms a blade main body;
a leading edge protector that covers a surface of the blade member at a leading edge portion of the blade main body;
a plate-shaped member that is arranged on a back surface opposite to a surface of the blade member covered by the leading edge protector; and
a fastening member that is disposed to pass through the leading edge protector, the blade member, and the plate-shaped member, and fastens the leading edge protector, the blade member, and the plate-shaped member by holding the leading edge protector and the plate-shaped member, wherein
the blade member is formed to have a gap between the blade member and the fastening member.

2. The blade according to claim 1, wherein the plate-shaped member is arranged in a state in which movement in a direction away from the back surface is regulated.

3. The blade according to claim 2, further comprising a supporting member that surrounds an outer peripheral part of the plate-shaped member in a direction along the back surface, at least part of the supporting member projecting toward the plate-shaped member side to regulate movement of the plate-shaped member in a direction away from the back surface.

4. The blade according to any one of claims 1 to 3, wherein the plate-shaped member is arranged in a state in which movement in a direction along the back surface is allowed.

5. The blade according to claim 4, further comprising an elastic member that is in contact with at least part of an outer peripheral part of the plate-shaped member in a direction along the back surface, and is elastically deformed by movement of the plate-shaped member in a direction along the back surface to allow the movement.

6. The blade according to any one of claims 1 to 5, wherein the plate-shaped member is formed of a resin material.

7. The blade according to any one of claims 1 to 5, wherein the plate-shaped member is formed of a metallic material.

8. The blade according to any one of claims 1 to 7, wherein the plate-shaped member is disposed in which a plurality of plate-shaped are laminated.

9. The blade according to claim 8, wherein the plate-shaped members respectively include sliding layers on opposing surfaces.

10. The blade according to any one of claims 1 to 9, wherein the fastening member includes a head portion that presses the leading edge protector toward the blade member side, a fastener portion that presses the plate-shaped member toward the blade member side, and a shaft portion that passes through the leading edge protector, the blade member, and the plate-shaped member to connect the head portion with the fastener portion.

11. The blade according to claim 10, wherein the fastening member is arranged in a state in which movement of the head portion in a direction along the surface of the blade member is regulated.

12. The blade according to claim 10 or 11, wherein the fastening member is a blind fastener that is deformable so that a diameter of the fastener portion is increased by an operation from the leading edge protector side.

13. The blade according to any one of claims 10 to 12, wherein the plate-shaped member is formed so that a surface in contact with the fastener portion is a rough surface.

14. The blade according to claim 10 or 11, wherein
the fastening member is a bolt-nut mechanism in which the shaft portion is screw-joined to the fastener portion, and
the plate-shaped member is a nut plate.

15. The blade according to claim 14, wherein
the nut plate includes a plate member and a bolt for fixing that fixes the plate member to the blade member, and
a gap is formed between the plate member and the bolt for fixing.

16. A method for manufacturing a blade, the method comprising the steps of:
arranging a leading edge protector that covers a surface of a blade member on a leading edge portion of a blade main body that is formed by using the blade member;
arranging a plate-shaped member on a back surface opposite to a surface covered by the leading edge protector of the blade member;
forming a through hole passing through the leading edge protector, the blade member, and the plate-shaped member; and
inserting a fastening member into the through hole to fasten the leading edge protector, the blade member, and the plate-shaped member, wherein
the step of forming the through hole includes forming the through hole to have a gap between the leading edge protector and the fastening member in a case in which the fastening member is arranged.
